# EUROPÄISCHE PATENTANMELDUNG

(11) **EP 0 731 272 A1**
(43) Veröffentlichungstag der Anmeldung: **11.09.1996**
(21) Anmeldenummer: 96890035.7
(22) Anmeldetag: 05.03.1996
(51) Int. Cl.: F03D 3/06, F03D 7/06

(54) **Wind- oder Wasserturbine mit senkrechter Drehachse**

(30) Priorität: 08.03.1995 AT 404/95
(71) Anmelder: Lukas, Peter, 1050 Wien (AT)
(72) Erfinder: Lukas, Peter, 1050 Wien (AT)
(74) Vertreter: Müllner, Erwin, Dr.

(57) **Zusammenfassung**

Die Vorrichtung zur Erzeugung von mechanischer Energie aus Strömungen kann insbesondere ein vertikalachsiges Windrad sein. Sie weist folgende Teile auf: eine obere und eine untere Antriebsscheibe (1, 1'), die um die vertikale Antriebsachse (3) der Vorrichtung drehbar gelagert sind; mehrere Strömungsprofile (2), die zwischen den Antriebsscheiben (1, 1') angeordnet und an diesen drehbar gelagert sind; eine Steuerscheibe (4), die drehbar und bezüglich der Antriebsscheiben (1, 1') exzentrisch gelagert ist; Zahnräder (12, 12'), die die Drehbewegung der Antriebsscheiben (1, 1') auf die Steuerscheibe (4) übertragen; und eine Steuereinrichtung, die aus Steuerbolzen (14), die an der Steuerscheibe (4) parallel zu ihrer Drehachse angeordnet sind; und Nuten (15), die in den Strömungsprofilen (2) oder in mit diesen verbundenen Teilen (Lenkhebel 13) vorgesehen sind besteht. Die Steuerbolzen (14) greifen in die Nuten (15) ein und bringen dadurch die Strömungsprofile (2) immer in eine vorgegebene Stellung bezüglich der Windrichtung. Erfindungsgemäß ist die Drehachse der Steuerscheibe (4) gegenüber der Antriebsachse (3) verschiebbar, wodurch sich der Anstellwinkel der Strömungsprofile (2) in einfacher Weise einstellen läßt.

## Beschreibung

Die vorliegende Erfindung betrifft Vorrichtung zur Erzeugung mechanischer Energie aus Strömungen, die folgendes aufweist: eine obere und eine untere Antriebsscheibe, die um eine vertikale Antriebsachse der Vorrichtung drehbar gelagert sind; mehrere Strömungsprofile, die zwischen den Antriebsscheiben angeordnet und an diesen drehbar gelagert sind; eine Steuerscheibe, die drehbar und bezüglich der Antriebsscheiben exzentrisch gelagert ist; Zahnräder, die die Drehbewegung der Antriebsscheiben auf die Steuerscheibe übertragen; und eine Steuereinrichtung, die aus Steuerbolzen, die an der Steuerscheibe parallel zu deren Drehachse angeordnet sind, und Nuten, die in den Strömungsprofilen oder in mit diesen verbundenen Teilen (Lenkhebel) vorgesehen sind, besteht, wobei die Steuerbolzen in die Nuten eingreifen und dadurch die Strömungsprofile immer in eine vorgegebene Stellung bezüglich der Windrichtung bringen.

Eine derartige, als Windrad ausgebildete Vorrichtung ist beispielsweise aus der US-PS 4 383 801 bekannt. Durch die Steuereinrichtung werden die Strömungsprofile pro Umdrehung der Antriebsscheiben einmal in der entgegensetzten Richtung in bezug auf die Antriebsscheiben gedreht, sodaß sie gegenüber der Erde nicht rotieren. Die Steuereinrichtung ist aber so ausgebildet, daß die Strömungsprofile nicht immer in dieselbe Richtung stehen, sondern daß sie jeweils in den günstigsten Anstellwinkel zum Wind gebracht werden, d.h. - in Windrichtung gesehen - sind die vorderen und die hinteren Strömungsprofile in entgegengesetzter Richtung zum Wind angestellt und die seitlich liegenden Strömungsprofile stehen in Windrichtung. Auf diese Weise werden die Antriebsscheiben in Umdrehung versetzt, sodaß beispielsweise ein angeschlossener Stromgenerator Strom erzeugen kann.

Der günstigste Anstellwinkel der Strömungsprofile hängt von der Windgeschwindigkeit ab, und es ist daher zweckmäßig, wenn dieser Anstellwinkel verändert werden kann. In der US-PS 4 383 801 ist bei der Ausbildung, wo die Steuerscheibe und die Antriebsscheibe mittels Zahnrädern kinematisch verbunden sind, keine derartige Verstellmöglichkeit vorgesehen. Bei einer anderen Kopplung über Bolzen, die an einer der Antriebsscheiben angebracht sind und in Löcher der Steuerscheibe ragen, kann eine Verstellmöglichkeit des Anstellwinkels dadurch erfolgen, daß die Bolzen nicht direkt auf der Antriebsscheibe, sondern auf einer koaxial zur Antriebsscheibe angeordneten Mitnehmerscheibe angeordnet werden; die Mitnehmerscheibe ist gegenüber der Antriebsscheibe verdrehbar, indem die gemeinsame Achse axial verschoben wird, weil die Verbindung zwischen Steuerscheibe und Achse durch einen in der Achse quer zur Achsrichtung vorgesehenen Bolzen erfolgt, der in einen schräg zur Achse verlaufenden Schlitz der Steuerscheibe eingreift.

Nachteilig bei dieser Konstruktion ist, daß die Verschiebung einer sich drehenden Achse mechanisch problematisch oder aber technisch aufwendig ist; gemäß der US-PS 4 383 801 ist vorgesehen, daß das Ende der Achse auf einer Spitze eines Verstellhebels ruht. Dadurch kommt es aber ohne Zweifel zu relativ hohem Verschleiß.

Konstruktionen, die der eingangs beschriebenen ähnlich sind, sind aus der US-PS 4 507 049 und aus der AT-PS 382 687 bekannt. Hier ist zur Einstellung des Anstellwinkels jeweils ein Fliehkraftregler vorgesehen. Dadurch werden zwar die oben genannten Probleme der mechanischen Übertragung der Einstellung auf die rotierenden Antriebsscheiben vermieden, nachteilig ist aber die relativ ungenau Regelung, die allen Fliehkraftreglern zu eigen ist.

Es ist Aufgabe der vorliegenden Erfindung, eine Vorrichtung der eingangs genannten Art so auszubilden, daß in einfacher Weise eine mechanische Übertragung der Einstellung des Anstellwinkels von einem Teil, der sich mit der Antriebsscheibe nicht mitdreht, auf die Antriebsscheibe möglich ist.

Diese Aufgabe wird durch eine Vorricbtung der eingangs genannten Art erfindungsgemäß dadurch gelöst, daß die Drehachse der Steuerscheibe gegenüber der Antriebsachse verschiebbar ist, daß sowohl eine der Antriebsscheiben als auch die Steuerscheibe mit je einem Zahnring versehen sind, die den gleichen Radius haben, wobei dieser Radius größer als der maximal mögliche Abstand der Antriebsachse von der Drehachse der Steuerscheibe ist, und daß die Achsen der Zahnräder normal zur Antriebsachse stehen und sowohl die Antriebsachse als auch die Drehachse der Steuerscheibe schneiden, sodaß sie bei allen möglichen Abständen zwischen der Drehachse der Steuerscheibe und der Antriebsachse mit den Zahnringen in Eingriff stehen.

Erfindungsgemäß läßt sich also der Abstand der Drehachse der Steuerscheibe von der Antriebsachse verstellen. Dadurch sind aber die bekannten Vorrichtungen zur Übertragung der Drehbewegung der Antriebsscheiben auf die Steuerscheibe nicht mehr verwendbar. Zur Übertragung der Drehbewegung bei gleichzeitig möglicher Verstellung des Achsabstandes ist erfindungsgemäß sowohl auf einer der Antriebsscheiben als auch auf der Steuerscheibe je ein Zahnring vorgesehen; diese Zahnringe haben den gleichen Durchmesser, die Zähne sind zueinander gerichtet (parallel zur Antriebsachse). Zwischen diesen beiden Zahnringen sind Zahnräder bzw. Zahnwalzen vorgesehen. Deren Achsen schneiden die Antriebsachse und die Drehachse der Steuerscheibe. Wenn nun der Achsabstand verändert wird, verschiebt sich nur einer der beiden Zahnringe entlang einem der Zahnräder parallel zu dessen Achse, sodaß die Übertragung der Drehbewegung dadurch nicht beeinflußt wird.

Durch die Änderung des Achsabstandes ändert sich die Lage der Steuerbolzen in den Nuten, die in den Strömungsprofilen oder in mit diesen verbundenen Teilen, z.B. in Lenkhebeln, vorgesehen sind. Je näher sich die Steuerbolzen bei den Achsbolzen der Steuerprofile befinden, um so größer wird der Anstellwinkel der Strömungsprofile.

Durch die Erfindung wird die Übertragung der Drehbewegung von den Antriebsscheiben auf die Steuerscheibe also nicht komplizierter; dennoch läßt sich aber lediglich durch Veränderung des Achsabstandes der Anstellwinkel der Strömungsprofile verändern. Damit ist auf einfache Weise erreicht, daß der Anstellwinkel von außen auf das sich drehende Windrad übertragen werden kann.

Es ist zweckmäßig, wenn die Nuten an einem Ende, vorzugsweise an dem der Lagerung der Strömungsprofile abgewandten Ende, eine kreisförmige Erweiterung (Bohrung) haben. Wenn der Achsabstand so gewählt wird, daß die Steuerbolzen in diesen Bohrungen liegen, übertragen sie keine Schwenkbewegung auf die Strömungsprofile, sodaß sich diese in den Wind stellen können. Dies ist immer dann zweckmäßig, wenn das Windrad - etwa wegen Wartungsarbeiten oder wegen zu hoher Windgeschwindigkeit - nicht betrieben werden soll.

Um in diesem Fall eine allzu freie Beweglichkeit der Strömungsprofile zu vermeiden (dies würde zu einem Flattern bzw. Klappern des Windrades führen), ist es günstig, wenn an den Steuerbolzen Exzenterplatten drehbar angeordnet sind, deren Länge gleich dem Durchmesser der Bohrungen und deren Breite gleich der Breite der Nuten ist. Dadurch liegt der Steuerbolzen bzw. die Exzenterplatte ständig in der Nut oder in der Bohrung an, sodaß ein Flattern der Strömungsprofile unmöglich ist.

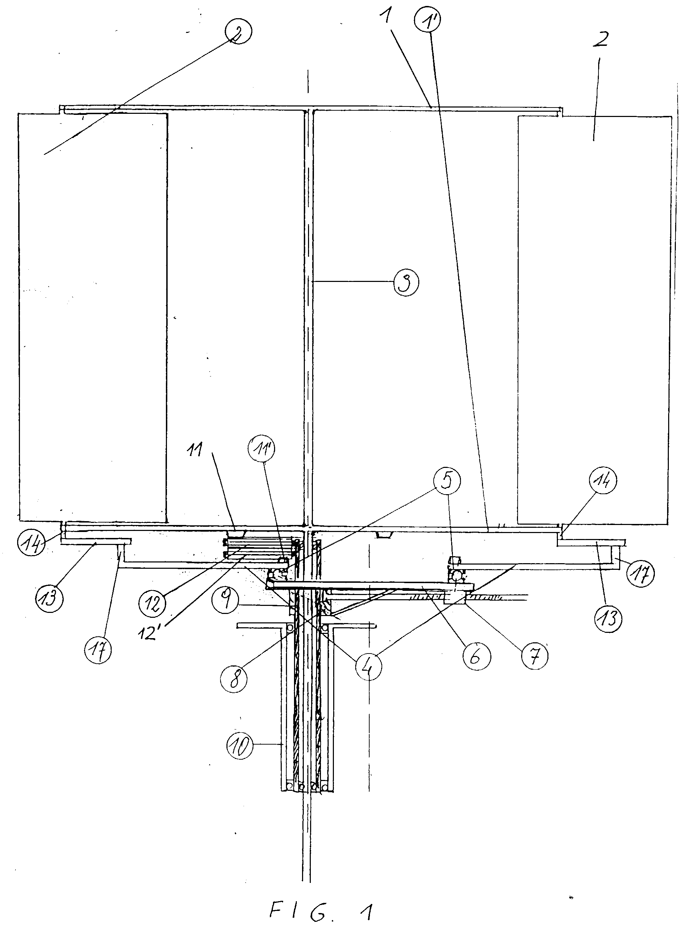

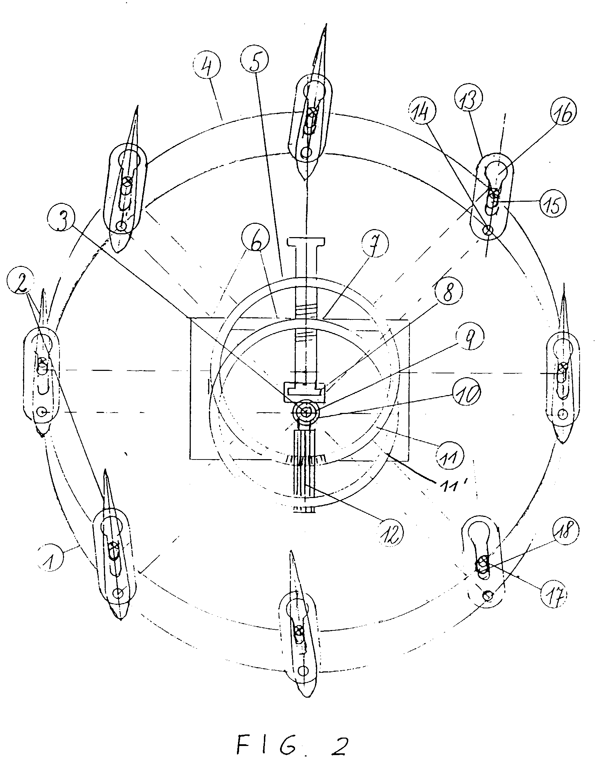

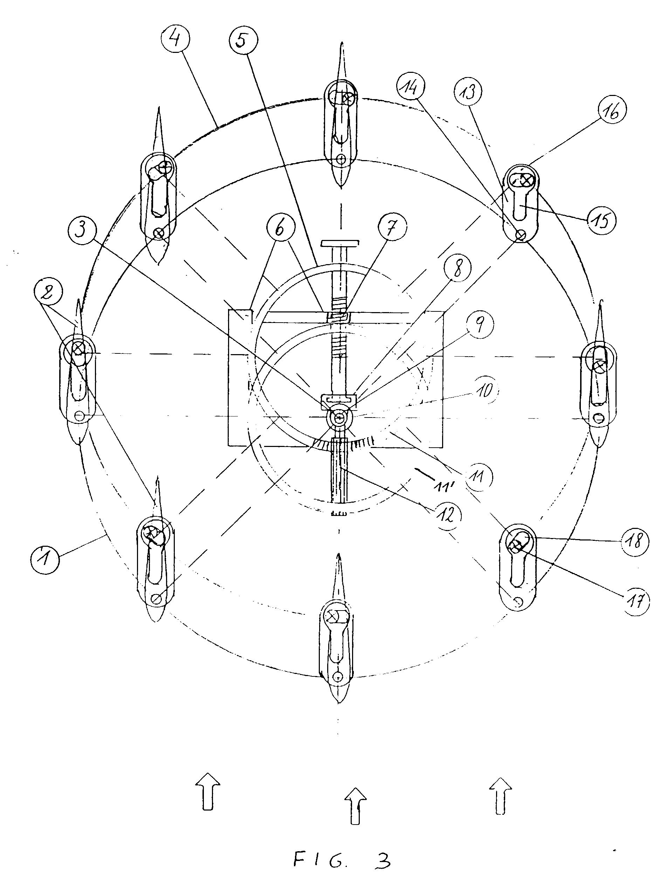

Anhand der beiliegenden Figuren wird die Erfindung näher erläutert. Es zeigt: Fig. 1 einen Querschnitt durch ein erfindungsgemäßes Windrad; Fig. 2 eine Draufsicht auf das Windrad gemäß Fig. 1 in Arbeitsstellung; und Fig. 3 dasselbe wie Fig. 2, jedoch in Ruhestellung.

Zwischen zwei horizontalen Antriebsscheiben 1, 1' werden mehrere im Profil symmetrische Strömungsprofile 2 senkrecht drehbar gelagert angebracht. Die Lagerung erfolgt jeweils mittels Achsbolzen 14 am Rand der Antriebsscheiben 1, 1'. Die beiden Antriebsscheiben 1, 1' sind mit einer starren Antriebsachse 3 fest verbunden. Unter der unteren Antriebsscheibe ist eine gleich große, parallel und synchron antreibbare, jedoch achsverschobene Steuerscheibe 4 mit großem Lager 5 auf dem beweglichen Teil 6 eines Schlittens mit Schneckenantrieb 7 (nach Art von Schraubstockführungen) angebracht. Der starre Teil 8 des Schlittens ist an einer Hohlachse 9 befestigt; in dieser ist die Antriebsachse 3 gelagert. Die Hohlachse 9 selbst ist in einem Halterohr 10 gelagert, um bei einer Richtungsänderung des Windes bzw. der Strömung die automatisch Änderung der Anstellrichtung der Strömungsprofile 2 mitmachen zu können. Diese Einstellung kann natürlich durch eine Windfahne unterstützt werden, so wie dies z.B. in der US-PS 4 383 801 beschrieben ist. Für den Synchronlauf zwischen den Antriebsscheiben 1, 1' und der Steuerscheibe 4 sind zwei gleich große Zahnringe 11, 11' vorgesehen, von denen einer unten an der Antriebsscheibe 1' zentrisch befestigt und der andere auf der Steuerscheibe 4 zentrisch befestigt ist. Weiters sind zwei ineinander greifende Zahnwalzen 12, 12' vorgesehen, von denen die obere in den Zahnring 11 an der Antriebsscheibe 1' und die untere an den Zahnring 11' auf der Steuerscheibe 4 eingreift. Die Achsen der beiden Zahnwalzen 12, 12' sind an der Hohlachse 3 montiert. Bei Veränderung des Achsabstandes zwischen den Antriebsscheiben 1, 1' und der Steuerscheibe 4 durch Verschiebung des Schlittens, auf welchem die Steuerscheibe 4 gelagert ist, gleitet der Zahnring 11' der Steuerscheibe 4 auf der unteren Zahnwalze 12' vor und zurück, sodaß auch bei Veränderung des Achsabstandes die Winkelstellung der Antriebsscheiben 1, 1' zur Steuerscheibe 4 (Synchronlauf) beibehalten wird.

Die Steuerung des Anstellwinkels der Strömungsprofile 2 erfolgt über Lenkhebel 13, die mit den Achsbolzen 14 der Strömungsprofile 2 starr verbunden sind. Die Achsbolzen 14 ragen durch die Lager der Antriebsscheibe 1' hindurch, weil die Lenkhebel 13 unter der unteren Antriebsscheibe 1' liegen. Die Lenkhebel 13 sind in der Längsrichtung mit einer Nut 15 versehen. Am Ende der Nut 15 ist eine Bohrung 16 vorgesehen, deren Durchmesser doppelt so groß ist wie die Breite der Nut. Auf der Steuerscheibe 4 sind an den Stellen, die den Positionen der Achsbolzen 14 auf der Antriebsscheibe 1' entsprechen, jedoch in der Drehrichtung um die halbe eigene Materialstärke zurückversetzt, Steuerbolzen 17 befestigt. Auf diesen Steuerbolzen 17 sind Exzenterplatten 18 drehbar angebracht. Deren Länge ist gleich dem Durchmesser der Bohrungen und deren Breite ist gleich der Breite der Nuten in den Lenkhebeln 13. Diese Exzenterplatten 18 können daher sowohl in die Bohrungen 16 als auch in die Nuten 15 der Lenkhebel 13 eingreifen.

Der größte Abstand zwischen Antriebsachse 3 und Drehachse der Steuerscheibe 4 ist somit der Abstand zwischen Achsbolzen 14 und Bohrung 16. Bei diesem Abstand kreisen die Exzenterplatten 18 der Steuerbolzen 17 in den Bohrungen 16 der Lenkhebel 13, die Strömungsprofile 2 befinden sich in 0°-Stellung zur Strömung, was bei großen Strömungsgeschwindigkeiten (Sturm) zum Schutz vor Beschädigung oder Zerstörung notwendig ist.

Es können auch Steuerbolzen 17 ohne Exzenterplatten verwendet werden, was jedoch bei 0° Anstellwinkel ein Schlagen oder Flattern der Strömungsprofile 2 hervorrufen könnte.

Wird der Achsabstand nun mittels des Schneckenantriebes am Schlitten (händisch oder von einem Stellmotor) verkleinert, so gleiten die Exzenterplatten 18 von den Bohrungen 16 in den Lenkhebeln 13 in die Nuten 15 und drücken die Lenkhebel 13 und die damit verbundenen Strömungsprofile 2, da die Steuerbolzen 17 - wie erwähnt - versetzt sind, schräg zur Strömungsrichtung (Anstellwinkel). Der Anstellwinkel ist an der der Strömung entgegenstehenden Seite umgekehrt zu der der Strömung abgewandten Seite der Antriebsscheiben 1, 1'.

Durch diese gegensätzlichen Anstellwinkel wird die Auftriebskraft der auf den Antriebsscheiben 1, 1' befindlichen Strömungsprofile 2 an beiden Seiten (Luv und Leeseite) in die gleiche Drehrichtung genutzt, und die Antriebsscheiben 1, 1' werden in Drehbewegung versetzt.

Durch Verstellung des Achsabstandes kann der Anstellwinkel der jeweiligen Strömungsgeschwindigkeit angepaßt werden, um eine optimale Nutzung der momentanen Strömung zu erreichen.

Die vorliegende Erfindung ist nicht auf dieses Ausführungsbeispiel beschränkt. Insbesondere ist die Vorrichtung auch zur Gewinnung von Energie aus Wasserströmungen geeignet. In diesem Fall ist es günstig, wenn die Steuerscheibe über der oberen Antriebsscheibe angebracht ist.

## Patentansprüche

1. Vorrichtung zur Erzeugung mechanischer Energie aus Strömungen, die folgendes aufweist: eine obere und eine untere Antriebsscheibe (1, 1'), die um eine vertikale Antriebsachse (3) der Vorrichtung drehbar gelagert sind; mehrere Strömungsprofile (2), die zwischen den Antriebsscheiben (1, 1') angeordnet und an diesen drehbar gelagert sind; eine Steuerscheibe (4), die drehbar und bezüglich der Antriebsscheiben (1, 1') exzentrisch gelagert ist; Zahnräder (12, 12'), die die Drehbewegung der Antriebsscheiben (1, 1') auf die Steuerscheibe (4) übertragen; und eine Steuereinrichtung, die aus Steuerbolzen (14), die an der Steuerscheibe (4) parallel zu deren Drehachse angeordnet sind, und Nuten (15), die in den Strömungsprofilen (2) oder in mit diesen verbundenen Teilen (Lenkhebel 13) vorgesehen sind, besteht, wobei die Steuerbolzen (14) in die Nuten (15) eingreifen und dadurch die Strömungsprofile (2) immer in eine vorgegebene Stellung bezüglich der Windrichtung bringen, **dadurch gekennzeichnet**, daß die Drehachse der Steuerscheibe (4) gegenüber der Antriebsachse (3) verschiebbar ist, daß sowohl eine der Antriebsscheiben (1) als auch die Steuerscheibe (4) mit je einem Zahnring (11, 11') versehen sind, die den gleichen Radius haben, wobei dieser Radius größer als der maximal mögliche Abstand der Antriebsachse (3) von der Drehachse der Steuerscheibe (4) ist, und daß die Achsen der Zahnräder (12, 12') normal zur Antriebsachse (3) stehen und sowohl die Antriebsachse (3) als auch die Drehachse der Steuerscheibe (4) schneiden, sodaß sie bei allen möglichen Abständen zwischen der Drehachse der Steuerscheibe (4) und der Antriebsachse (3) mit den Zahnringen (11, 11') in Eingriff stehen.

2. Vorrichtung nach Anspruch 1, **dadurch gekennzeichnet**, daß die Nuten (15) an einem Ende, vorzugsweise an dem der Lagerung der Strömungsprofile (2) abgewandten Ende, eine kreisförmige Erweiterung (Bohrung 16) haben.

3. Vorrichtung nach Anspruch 2, **dadurch gekennzeichnet**, daß an den Steuerbolzen (17) Exzenterplatten (18) drehbar angeordnet sind, deren Länge gleich dem Durchmesser der Bohrungen (16) und deren Breite gleich der Breite der Nuten (15) ist.
